# EUROPEAN PATENT APPLICATION

(11) **EP 4 478 101 A1**
(43) Date of publication of application: **18.12.2024**
(21) Application number: 24182049.7
(22) Date of filing: 13.06.2024
(51) Int. Cl.: G02B 6/44

(54) **RACK MOUNT ASSEMBLIES FOR EQUIPMENT RACKS OF A FIBER OPTIC NETWORK AND METHOD OF INSTALLING SAME**

(30) Priority: 14.06.2023 US 202363472884 P
(71) Applicant: Corning Research & Development Corporation, Corning, New York 14831 (US)
(72) Inventor: RUDA, Michal, 95-060 Brzeziny (PL)
(74) Representative: Reddie & Grose LLP

(57) **Abstract**

A rack mount assembly configured to be received in an equipment rack of a fiber optic network is disclosed. The rack mount assembly includes a shelf having a support surface and first and second brackets configured to be attached to respective frame members of the equipment rack. The brackets are configured to form joints with the shelf. The assembly may include a clip that is configured to be removably coupled to one of the joints. When coupled to a joint, the clip forms a hinge at that joint. The shelf is pivotal at one of the joints and is movable from a closed position to an opened position in which the shelf is configured to extend outwardly of the front side of the rack. A method of installing the rack mount assembly in the equipment rack is also disclosed.

## Description

### Priority Application

This application claims the benefit of priority of U.S. Provisional Application No. 63/472,884, filed on June 14, 2023, the content of which is relied upon and incorporated herein by reference in its entirety.

### Technical Field

This disclosure relates generally to an equipment rack through which fiber optic cables are routed, and more particularly to a rack mount assembly for use in an equipment rack of a fiber optic network and a method of installing the rack mount assembly in the equipment rack.

### Background

The large amount of data and other information transmitted over the internet has led businesses and other organizations to develop large scale fiber optic networks for organizing, processing, storing and/or disseminating large amounts of data. Network design and cabling-infrastructure architecture are becoming increasingly large and complex to handle growing industry needs.

There are many different network architectures, and the various tasks required to distribute optical signals (e.g., splitting, splicing, routing, connecting subscribers) can occur at several locations. Regardless of whether a location is considered a central office, local convergence point, network access point, subscriber premise, or something else, fiber optic equipment is used to house components that carry out one or more of the tasks. The fiber optic equipment, which may include fiber distribution hubs (FDH), cabinets, closures, network interface devices, distribution frames, etc. Many types of fiber optic equipment include equipment racks or frames to which components are mounted. Organizing fiber optic cables within this equipment can be a challenge.

Although most current cabling infrastructure architecture is satisfactory for present industry needs, the increasing density of equipment trays and feeder cables within racks requires a more adaptable and dependable cable management system, particularly for trays that are selectively removable from the equipment rack. The ever-increasing optical fibers and connector density within racks requires more technician time for installation and maintenance. This drives the costs of installation and maintenance of fiber optic networks.

Therefore, a need exists for equipment racks and assemblies that are more flexible, efficient, and capable of maintaining or easing installation and maintenance of the growing density of optical fibers and connectors.

### Summary

In one aspect of the disclosure, a rack mount assembly configured to be received in an equipment rack, for example in a central office or in street cabinets, of a fiber optic network is disclosed. The rack mount assembly includes a shelf having a main support surface, a first bracket configured to be attached to a first vertical frame member of the equipment rack, and a second bracket configured to be attached to a second vertical frame of the equipment rack. The first bracket is configured to form a first joint with the shelf, and the second bracket is configured to form a second joint with the shelf. The shelf is pivotal at at least one of the first joint and the second joint such that when the rack mount assembly is secured in the equipment rack, the shelf is movable from a closed position to an opened position in which the shelf is configured to extend outwardly of the front side of the equipment rack.

In one embodiment, the rack mount assembly may further include a clip that is configured to be removably coupled to the first joint, and when coupled to the first joint, the clip forms a hinge at the first joint. In one embodiment, the clip may include a web coupling a first leg to a second leg, each of the first leg and the second leg including a ledge, and the first leg and second leg being movable relative to the web.

With regard to the opened and/or closed positions, in one embodiment, for example, the shelf may be pivotal by 90° from the closed position to the opened position. In one embodiment, in the opened position, a top, a bottom, and a rear side of the shelf may be configured to be exposed and accessible relative to the equipment rack. Moreover, in one embodiment, in the opened position, the shelf may be coupled to the first bracket at the first joint and disconnected from the second bracket. In one embodiment with respect to the closed position, the shelf may be coupled to each of the first bracket and the second bracket at the first joint and the second joint, respectively. In one embodiment, the second joint may be configured to be selectively disassembled so that the shelf is pivotal toward the opened position.

In one embodiment, the first bracket may include one of a first post or a first socket and the shelf may include the other of the first post or the first socket, and wherein the first socket may be configured to receive the first post to form the first joint. Additionally, in one embodiment, the first socket may include a pair of recesses, each recess of the pair of recesses receiving one of the ledges when the clip is coupled to the first joint.

In one embodiment, the first socket may have a C-shaped cross-sectional configuration. In one embodiment, the first socket may have an opening that has a dimension less than an outside dimension of the first post.

In one embodiment, the first bracket may include: (i) a base wall, (ii) a pair of opposing flanges extending from the base wall, the first post extending between the pair of opposing flanges, and (iii) a mounting flange extending from the base wall in an opposing direction from the pair of opposing flanges, wherein the mounting flange is configured to secure the first bracket to the first vertical frame member.

In one embodiment, the rack mount assembly may further include at least one module supported on the main support surface, the at least one module being configured to receive at least one optical fiber. In one embodiment, the at least one module may include a cover and a base, the cover being coupled to the base at a hinge. In one embodiment, the at least one module may enclose at least one splice tray for routing at least one optical fiber.

In another aspect of the disclosure, an equipment rack in a fiber optic network is disclosed. The equipment rack includes one or more feeder cables containing one or more optical fibers. The equipment rack further includes one or more rack mount assemblies according to the first aspect described above mounted in the equipment rack with the one or more optical fibers routed to the rack mount assembly.

In another aspect of the disclosure, a method of installing a rack mount assembly in an equipment rack according to the second aspect described above includes: i) attaching the first bracket to a first vertical frame member of the equipment rack; ii) attaching the second bracket to a second vertical frame member of the equipment rack; iii) pivoting the shelf outwardly relative to the second vertical frame to an opened position in which the shelf extends outwardly of the first vertical frame member at a first joint formed between the shelf and the first bracket; iv) routing one or more optical fibers from one or more feeder cables along a main support surface of the shelf; and v) pivoting the shelf from the opened position to a closed position in which the shelf is coupled to the first bracket at the first joint and the second bracket at a second joint.

In one embodiment, prior to pivoting the shelf to the opened position, the method may further include attaching a clip to the first joint to form a hinge at the first joint, and wherein routing the one or more optical fibers may include routing the one or more optical fibers proximate the hinge.

In one embodiment, after attaching the clip to the first joint and before routing the one or more optical fibers, the method may further include removing the clip from the first joint and attaching the clip to the second joint to form a hinge at the second joint, and wherein routing the one or more optical fibers includes routing the one or more optical fibers proximate the hinge.

In one embodiment, prior to pivoting the shelf to the opened position, the method may further include attaching the shelf to the first bracket to form the first joint and attaching the shelf to the second bracket to form the second joint. In one embodiment, attaching the shelf to the first bracket follows attaching the first bracket to the first vertical frame member, and attaching the shelf to the second bracket follows attaching the second bracket to the second vertical frame member. In one embodiment, for example, attaching the shelf to the first bracket may include pushing the shelf into engagement with the first bracket to form the first joint, and attaching the shelf to the second bracket may include pushing the shelf into engagement with the second bracket to form the second joint.

In one embodiment, routing the one or more optical fibers may include routing the one or more optical fibers through a module supported on the main support surface.

Additional features and advantages will be set forth in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand the nature and character of the claims.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a schematic view illustrating an exemplary carrier network including a passive optical network in which embodiments of the disclosure may be used.
Fig. 2 is a partially disassembled perspective view of an exemplary equipment rack in the fiber optic network shown in Fig. 1, illustrating a rack mount assembly in an installed, closed position in the equipment rack according to one embodiment.
Fig. 3 is a partially disassembled perspective view of an exemplary equipment rack in the fiber optic network shown in Fig. 1, illustrating a rack mount assembly in an opened position in the equipment rack according to one embodiment.
Fig. 4 is a cross sectional view through the equipment rack of Fig. 2 providing a plan view of a rack mount assembly according to one embodiment.
Fig. 4A is an enlarged view of the rack mount assembly shown in Fig. 4.
Fig. 4B is a plan view of a clip according to one embodiment of the disclosure.
Fig. 5 is a plan view of installation of a rack mount assembly into an equipment rack according to one embodiment.
Fig. 5A is an enlarged view of the rack mount assembly shown in Fig. 5.
Fig. 6 is a plan view the rack mount assembly of Fig. 5 installed in an equipment rack according to one embodiment.
Fig. 6A is an enlarged view of the rack mount assembly shown in Fig. 6.
Fig. 7 is a plan view of a rack mount assembly in an opened position with assembly of a clip according to one embodiment.
Fig. 7A is an enlarged view of the rack mount assembly shown in Fig. 7.
Fig. 8 is a plan view of a rack mount assembly in the opened position during removal of a clip according to one embodiment.
Fig. 8A is an enlarged view of disassembly of the clip shown in Fig. 8.
Fig. 9 is a plan view of a rack mount assembly in a closed position according to one embodiment.
Fig. 9A is an enlarged view of the rack mount assembly shown in Fig. 9.
Fig. 10 is a plan view of a rack mount assembly in an opened position during assembly of a clip according to one embodiment.
Fig. 10A is an enlarged view of the rack mount assembly shown in Fig. 10 according to one embodiment.
Fig. 11 is a plan view of a rack mount assembly in a closed position according to one embodiment.
Fig. 11A is an enlarged view of the rack mount assembly shown in Fig. 11 according to one embodiment.
Fig. 12 is a disassembled perspective view of a rack mount assembly according to one embodiment.
Fig. 13 is a perspective view of a rack mount assembly coupled to an equipment rack and with a shelf in an opened position according to one embodiment.
Fig. 14-16 are perspective views of a shelf of a rack mount assembly with two modules in an opened position according to one embodiment.

### Detailed Description

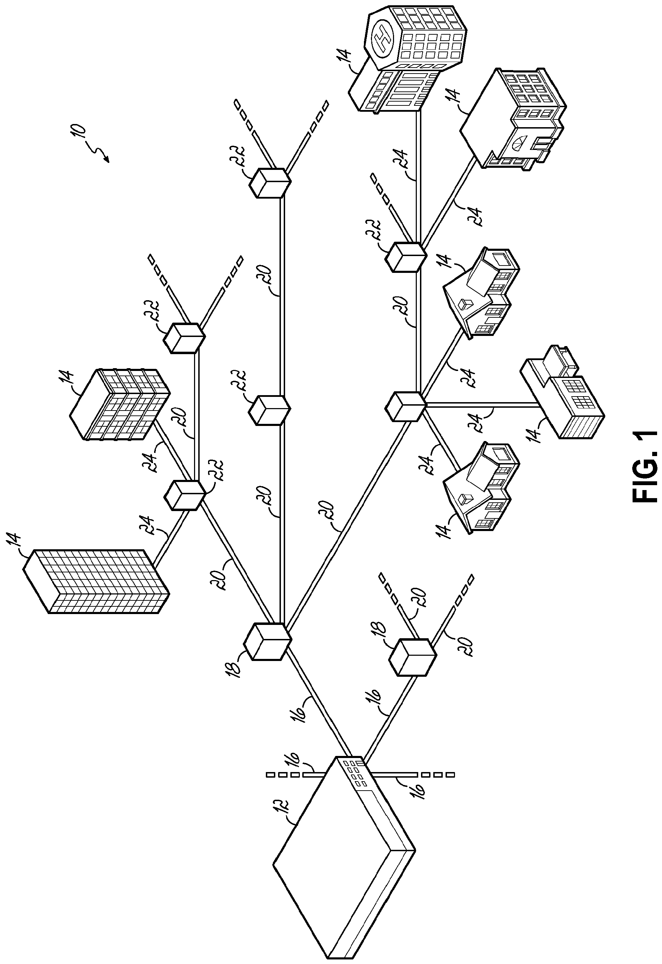

Embodiments of the disclosure pertain to a rack mount assembly for use in fiber optic routing and connectivity in equipment racks and to a method for installing a rack mount assembly in an equipment rack for use in a FTTx carrier network, such as that shown by way of example in Fig. 1 and described below. In these and other locations, the rack mount assemblies according to embodiments of the disclosure provide a shelf capable of pivotal movement from a closed position, which is a normal, installed position when the equipment rack is in use, to an opened position by which the shelf extends outwardly from the equipment rack and so the shelf is accessible. More specifically, the shelf is pivotal outwardly relative to a front side of the equipment rack. Pivotal movement is in a plane that is generally parallel with the ground. So, the shelf swings outwardly in a plane defined by the shelf from left to right or from right to left relative to the equipment rack. The shelf remains movably coupled to the rack at a hinge so that the equipment rack supports the shelf and its contents through the entire pivotal motion, including in the opened position. In the opened position, a technician may therefore use both hands to, for example, reroute fiber optic cables, route new fiber optic cables, and secure connectors to the assembly. And, in the opened position, a technician may then more easily access one or more of the top, bottom, and rear sides of the shelf that are generally not easily accessible when the shelf is in the closed position. By the pivotal motion, fiber optic cables routed to and through the shelf remain largely undisturbed by rotational movement of the shelf relative to the rack. Thus, there is no need to disconnect optical fibers prior to moving the shelf. A technician may utilize the opened position for maintenance or during installation or both during installation and then later during maintenance. These and other benefits and advantages of the present disclosure will be described in greater detail below.

As illustrated in Fig. 1, an exemplary FTTx carrier fiber optic network 10 distributes optical signals generated at a switching point 12 (e.g., a central office) to one or more subscriber premises 14. Optical line terminals (OLTs - not shown) at the switching point 12 convert electrical signals into optical signals. Fiber optic feeder cables 16 then carry the optical signals to various local convergence points 18. The convergence points 18 act as locations for making cross-connections and interconnections (e.g., by splicing or patching cables). The local convergence points 18 often include splitters or WDM components to enable any given optical fiber in the feeder cable 16 to serve multiple subscriber premises 14. As a result, the optical signals are "branched out" from the optical fibers of the feeder cables 16 to optical fibers of fiber optic distribution cables 20 that exit the local convergence points 18.

At remote network access points 22 closer to the subscriber premises 14, some or all the optical fibers in the distribution cables 20 may be accessed to connect to one or more subscriber premises 14. Drop cables 24 extend from the network access points 22 to the subscriber premises 14, which may be single-dwelling units (SDU), multi-dwelling units (MDU), businesses, and/or other facilities or buildings. An optical network terminal (ONT - not shown) located at or inside the subscriber premises 14 receives one or more optical signals and converts the optical signals back to electrical signals at the remote distribution points or subscriber premises 14. Equipment racks may be located in any single one or each of the switching points 12, local convergence points 18, and remote network access points 22 in the carrier network 10. These locations are exemplary, as equipment racks may be located in other locations, such as in data centers.

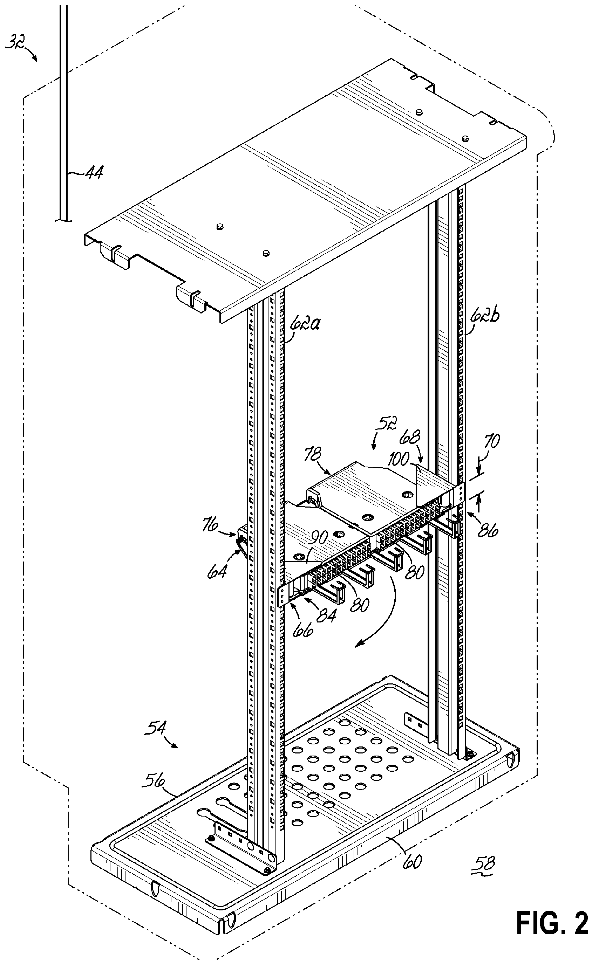

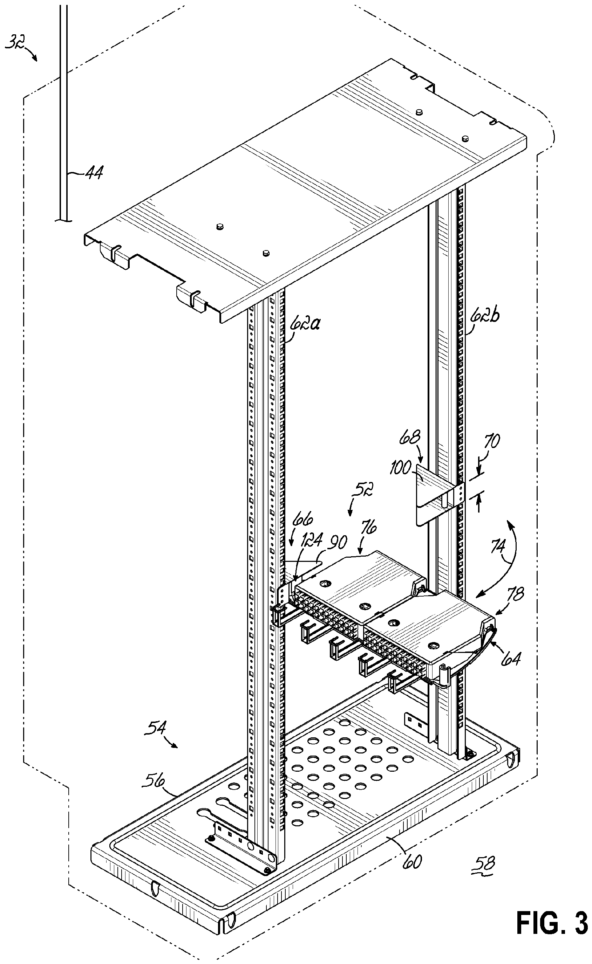

In one exemplary location, and with reference to Fig. 2 and 3, an equipment rack 32 may receive one or more feeder cables 44, which may be any one of the feeder cables 16, distribution cables 20, or drop cables 24 in Fig. 1. The equipment rack 32 is configured to support one or more rack mount assemblies 52 to which the feeder cables 44 may be routed. In that regard and in the exemplary embodiment, the rack 32 includes a housing 54 having a back side 56 and a front side 60 and generally houses network equipment and receives the feeder cable 44 within its interior. As shown in Fig. 3, the rack 32 may include a pair of vertical frame members 62a, 62b between which each rack mount assembly 52 is supported. The vertical frame members 62a, 62b, the front side 60, and the back side 56 of the equipment rack 32 generally define a space within the rack 32 for each rack mount assembly 52. While embodiments of the rack mount assembly 52 are not generally limited in dimension, the rack mount assembly 52 is scalable to meet 19", 21", and 23" or other rack standards. The rack mount assembly 52 is generally installed and removable from the front side 60. Further, a technician or other personnel access and maintain the rack mount assembly 52 from the front side 60 while standing on the floor 58. Although only a single rack mount assembly 52 is shown in Figs. 2 and 3, additional rack mount assemblies 52 may be mounted to the frame members 62a, 62b to populate the entirety of a height of the rack 32 along the frame members 62a, 62b. Fibers from the feed cable 44 (Fig. 2) may then be routed to and terminated within each rack mount assembly 52.

Referring to Figs. 2, 3, and 4, in the exemplary embodiment shown, the rack mount assembly 52 includes a main tray or shelf 64 that is coupled between a pair of brackets 66, 68. A left module 76 and a right module 78 may be supported on the shelf 64. While two modules are shown, embodiments of the rack mount assembly 52 are not limited to any particular number of modules. Further, the shelf 64 may support other equipment. In the embodiment shown, the modules 76, 78 receive optical fibers from the feeder cable 44 for connection to adapters and connectors 80 of the modules 76, 78.

As shown, the brackets 66, 68 are fixed to respective ones of the frame members 62a, 62b and couple the shelf 64 therebetween for securing the rack mount assembly 52 to each of the frame members 62a, 62b. One or both brackets 66, 68 may define a height 70 of the rack mount assembly 52. Embodiments of the disclosure are not limited to any given height, however, by way of example only and not limitation, the height 70 may be 1U, 2U, 3U, or 4U as well as to other predetermined heights.

According to embodiments of the disclosure, advantageously, technicians may install, organize, and maintain fibers from the feeder cable 44 in the rack mount assembly 52 more easily by swinging at least a portion of the rack mount assembly 52 outwardly relative to the rack 32, to gain unfettered, direct access to a top, a bottom, and a rear of the shelf 64 and without removing the entirety of the rack mount assembly 52 (that is, pulling the rack mount assembly 52 from its installed position) from the rack 32. Further in that regard, optical fibers in the rack mount assembly 52, such as those from feeder cable 44, remain supported by the rack 32 and the rack mount assembly 52 due to a pivotal connection of the rack mount assembly 52 with the rack 32. The technician need not disconnect fiber optic cables prior to pivoting the shelf 64 outwardly. In this way, for example, interconnectivity of equipment of the fiber optic network 10 may not be disrupted during maintenance or other similar activity.

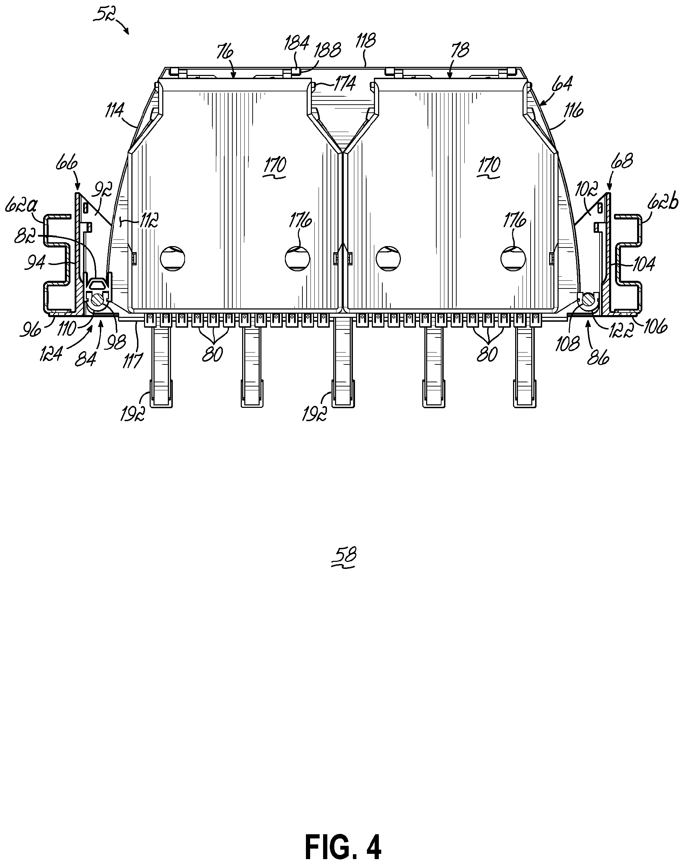

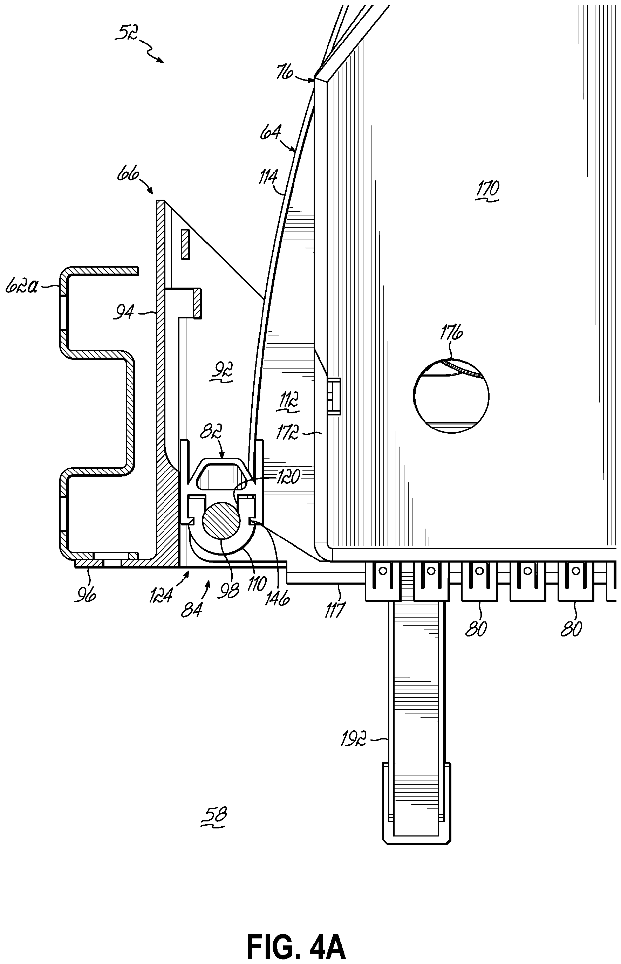

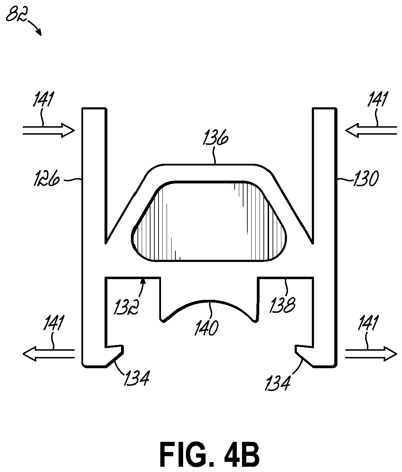

To those and other ends, a portion of the rack mount assembly 52 is pivotal relative to a selected one of the frame members 62a, 62b after the rack mount assembly 52 is installed in the rack 32. In the embodiment shown, the left bracket 66 and the right bracket 68 are joined with the shelf 64 at joints 84 and 86, respectively. The shelf 64 may be pivotal at either joint 84 and 86. Further, the rack mount assembly 52 includes a hinge enabler or clip 82 (Figs. 4 and 4A) that forms a hinge at one of the joints 84 and 86 to facilitate secure pivotal motion described above and shown, for example, in Fig. 2 relative to Fig. 3 by arrow 74 in Fig. 3.

By way of example, and with reference to the exemplary embodiment of Figs. 3, 4, and 4A, at the left vertical frame member 62a, the left bracket 66 includes a top flange 90 and a bottom flange 92 each extending away from a base wall 94. Each flange 90, 92 has a triangular configuration and generally defines the height 70 (Fig. 4) of the rack mount assembly 52. A mounting flange 96 extends from the base wall 94 in a direction generally perpendicular to the base wall 94 and away from the top and bottom flanges 90, 92. The mounting flange 96 is configured to cooperate with the left vertical frame member 62a so that the left bracket 66 is fixable to the vertical frame member 62a via a fastener (not shown) or by other means. A post 98 extends between top and bottom flanges 90, 92 at a position spaced apart from the base wall 94. In the exemplary embodiment, the post 98 extends from the top flange 90 to the bottom flange 92 and is configured to form the joint 84 between the shelf 64 and the left bracket 66. The joint 84 defines a pivot axis near the left frame member 62a.

Similarly, and with reference to Figs. 3 and 4, the right bracket 68 includes a top flange 100 and a bottom flange 102 each extending away from a base wall 104. Each flange 100, 102 has a triangular configuration. A mounting flange 106 extends from the base wall 104 in a direction generally perpendicular to the base wall 104 and away from the top and bottom flanges 100, 102. The mounting flange 106 is configured to cooperate with the right vertical frame member 62b so that the right bracket 68 is fixable to the right frame member 62b via a fastener (not shown) or by other means. A post 108 extends between top and bottom flanges 100, 102 at a position spaced apart from the base wall 104. In the exemplary embodiment, the post 108 extends from the top flange 100 to the bottom flange 102 and is configured to cooperate with the shelf 64 to form the joint 86 between the shelf 64 and the right bracket 68. The joint 86 defines a pivot axis near the right frame member 62b.

In the exemplary embodiment shown in Figs. 3, 4, and 4A, the shelf 64 is coupled to the left bracket 66 at the joint 84 and to the right bracket 68 at joint 86. The shelf 64 is selectively pivotal about either joint 84, 86. In that regard, the shelf 64 includes a socket 110 extending vertically from a main support surface 112 along a left side 114 of the shelf 64. The main support surface 112 is further defined by a right side 116, a front side 117, and a rear side 118. The left side 114 of the shelf 64 may be arcuate in shape as determined by an arc traced by the shelf 64 during rotation about the joint 86 so that the left side 114 clears the left bracket 66 as the shelf 64 is rotated to the opened position. The socket 110 has an elongated C-shaped cross-sectional configuration extending in a vertical direction and is sized to frictionally engage the left post 98. In that regard, in an exemplary embodiment, the socket 110 includes an opening 120 (Fig. 4A) sized to receive the post 98 therein. The joint 84 is formed when the post 98 is held by the socket 110. The opening 120 may be slightly undersized relative to an outside dimension of the post 98 so that the socket 110 is elastically strained when the post 98 is inserted through the opening 120. In other words, in one embodiment, the opening 120 and post 98 form an interference fit. The fit of the post 98 and the socket 110, particularly the size relationship between the opening 120 and the post 98, may resist separation of the post 98 from within the socket 110. While not shown, the socket 110 may be formed in the bracket 66 and the post 98 may be part of the shelf 64. That is, the relationship may be reversed. Accordingly, embodiments of the disclosure are not limited to the specific arrangement of the socket 110 and the post 98 shown unless stated otherwise.

Referring to Figs. 3 and 4, a similar configuration may exist at a right side 116 of the main support surface 112 of the shelf 64 forming the joint 86. The right side 116 may be arcuate in shape as determined by an arc traced by the shelf 64 during rotation about the joint 84 so that the right side 116 clears the right bracket 68 as the shelf 64 is rotated to the opened position. The right side 116 of the main support surface 112 includes a socket 122 extending vertically from the main support surface 112 of the shelf 64. The socket 122 has an elongated C-shaped configuration extending in a vertical direction and is sized to frictionally engage the right post 108. In that regard, the socket 122 includes an opening 128 (Fig. 4) sized to receive the post 108 therein. The joint 86 is formed when the post 108 is held by the socket 122. The opening 128 may be slightly undersized relative to an outside dimension of the post 108 so that the socket 122 is elastically strained when the post 108 is inserted through the opening 128. The fit of the post 108 and the socket 122, particularly the size relationship between the opening 128 and the post 108, may resist separation of the post 108 from within the socket 122. While not shown, the socket 122 may be formed in the bracket 68 and the post 108 may be part of the shelf 64. That is, the relationship may be reversed and may be the same or different from the left bracket 66 and post 98. Accordingly, embodiments of the disclosure are not limited to the specific arrangement of the socket 122 and the post 108 shown unless stated otherwise.

Referring to Figs. 3, 4, and 4A, at the joint 84, the assembly of the post 98, the socket 110, and the clip 82 collectively form a hinge 124. By the hinge 124, a technician may swing the shelf 64 about a pivot axis, as is shown in Fig. 2 relative to Fig. 3. More specifically, in one embodiment, the clip 82 may prevent the post 98 from unintentionally escaping from the socket 110 during pivoting movement of the shelf 64. In the exemplary embodiment, the clip 82 closes off the opening 120 of the socket 110, thus preventing the joint 84 from being unintentionally disassembled if, for example, a lateral load (e.g., one in the plane of the figure) is applied on the shelf 64 in a direction outwardly of the rack 32, such as a force pulling the shelf 64 out of the rack 32.

With reference to Fig. 4B, the clip 82 may have a roughly H-shaped configuration with a left leg 126 and a right leg 130 coupled together by a web 132. Although not shown, the height of the clip 82 may be about the height 70 between top and bottom flanges 90, 92 or some lesser dimension. Each of the legs 126 and 130 includes a tab or a ledge 134 extending inwardly and generally toward one another. The web 132 may have a D-shaped configuration in which a truss-like portion 136 may reinforce a main span 138 of the web 132 to increase the stiffness of the main span 138. The main span 138 may include a race-like protrusion 140 configured to fit into opening 120 of the socket 110 and to contact the post 98.

The clip 82 is configured to deform under application of a pinching force, indicated by arrows 141 in Fig. 4B applied to one end of each of the legs 126, 130. The pinching force may be applied by hand, such as between thumb and forefinger or with a pair of pliers. Under the pinching force, the legs 126, 130 may pivot about the web 132 so that a distance between the ledges 134 increases. When the clip 82 is deformed, it may be assembled with the post 98 with the legs 126, 130 straddling opposing sides of the socket 110 across the opening 120, and the race-like protrusion 140 is positioned in the opening 120 of the socket 110. When assembled and the pinching force is removed, the ledges 134 engage recesses 146 in the socket 110, as is shown in Fig. 4A.

As an example of the pivotal movement about the hinge 124, comparing Fig. 2 and Fig. 3, the shelf 64 is shown rotated clockwise (by arrow 74 in Fig. 3) proximate the left bracket 66 and the left frame member 62a at the joint 84. A technician may therefore rotate the shelf 64 from an installed or closed position, in Fig. 2, to an opened position in Fig. 3 after the rack mount assembly 52 is installed in the rack 32.

In further detail with respect to the exemplary embodiment, a technician may selectively disconnect the shelf 64 from the right bracket 68. Disconnection occurs at the joint 86. Specifically, the technician disassembles the joint 86 by applying an outward force greater than a predetermined threshold force to separate the socket 122 from the post 108 through the opening 128. The force may be in an outward direction that is generally perpendicular to the front side 117 in Fig. 4. In other words, the technician may only need to pull sufficiently hard on the shelf 64 near the joint 86 for the socket 122 to separate from the post 108. At disconnection, that is, as the socket 122 separates from the post 108, there may be an audible and/or tactile response confirming for the technician that the shelf 64 is free to be rotated. In the closed position then, the joint 86 may operate as a latch by requiring an intentional opening force of a threshold magnitude to disassemble the joint 86. The same relationship may be established when the clip 82 is attached to the right joint 86, described below, so that the shelf 64 rotates outwardly and to the right (counterclockwise).

With reference to Fig. 3, during clockwise rotation of the shelf 64 toward the opened position at the left joint 84, the right bracket 68 remains fixed to the right frame member 62b. The technician rotates the shelf 64 relative to the left frame member 62a at the hinge 124. Thus, the shelf 64 is rotated outwardly relative to the front side 60 of the rack 32. Rotational movement is in a plane that is generally parallel with the floor 58. So, the shelf 64 swings outwardly in a plane defined by the shelf 64 itself at the hinge 124 from right to left relative to the equipment rack 32.

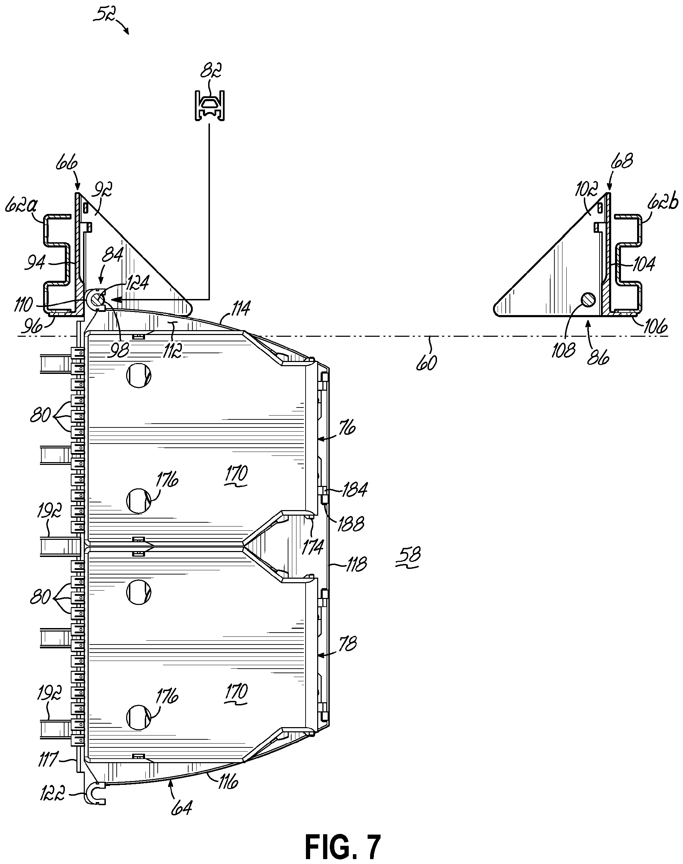

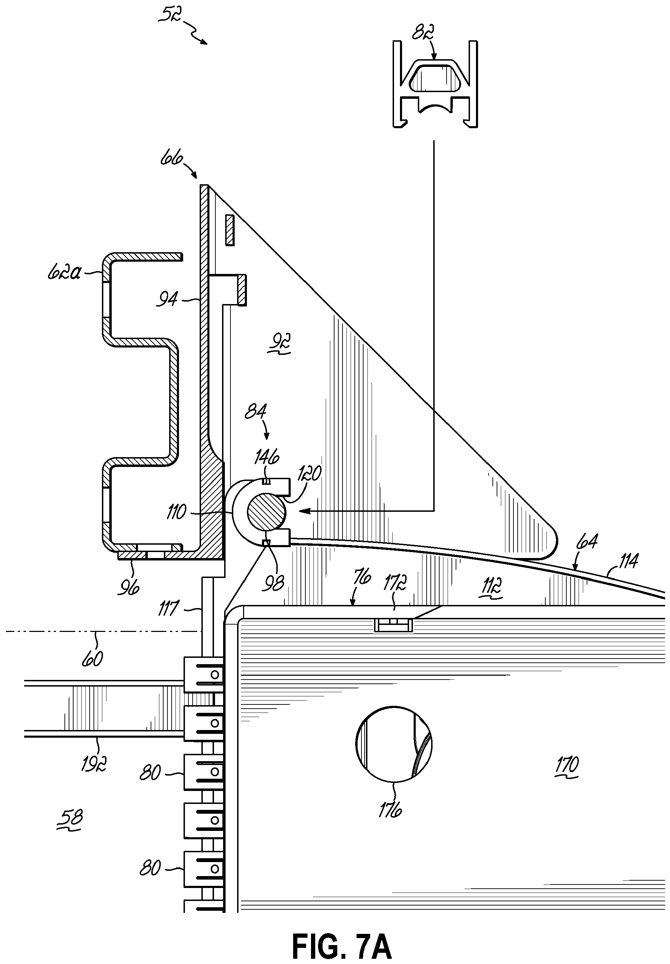

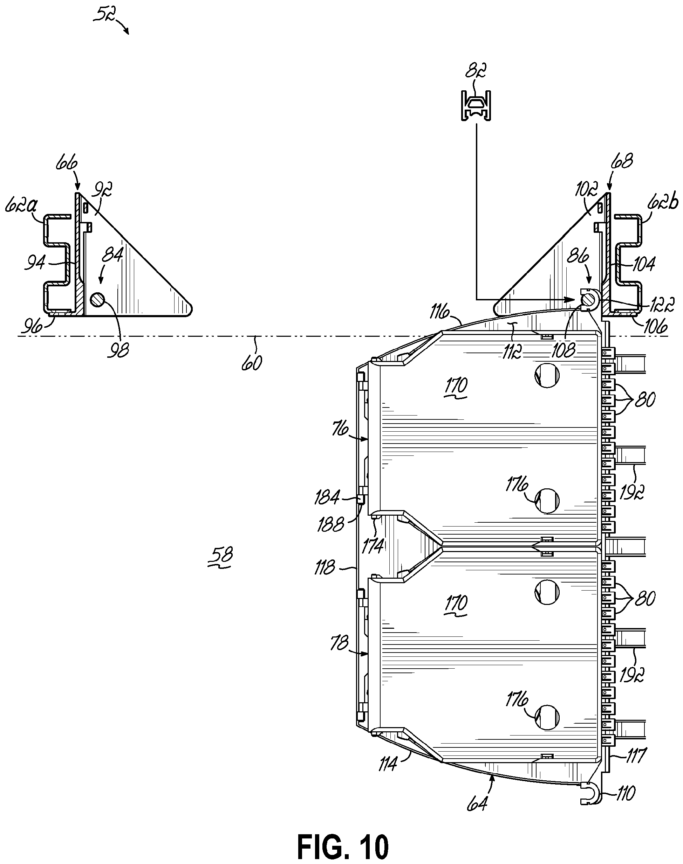

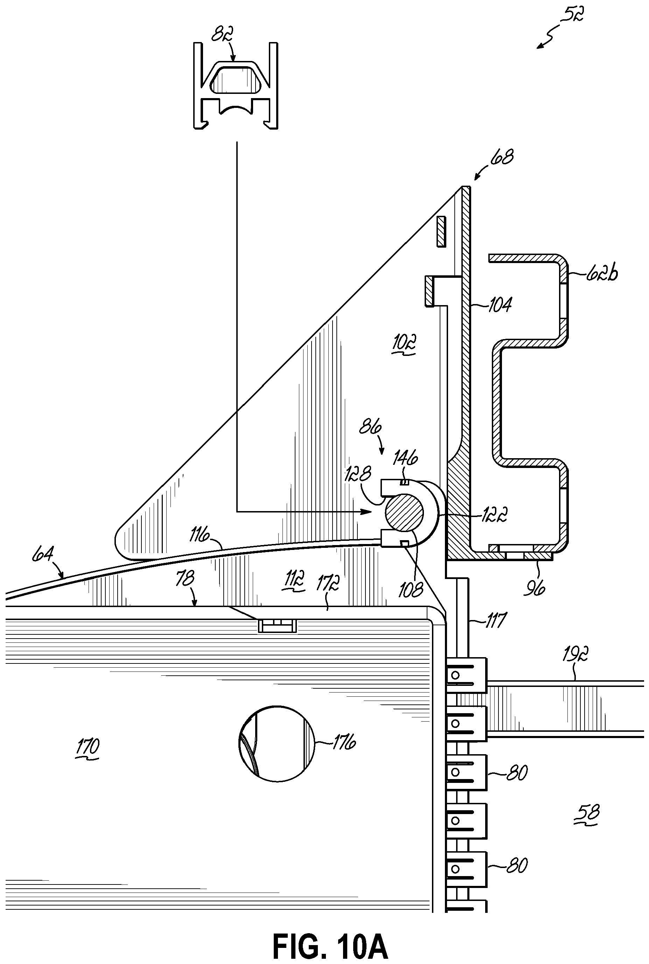

In the opened position, the shelf 64 protrudes outwardly relative to the front side 60 of the rack 32 and so makes the contents of the shelf 64 more easily accessible. In Fig. 3, a technician standing in front of the rack 32 on the floor 58 can easily access the contents of the shelf 64, such as the modules 76 and 78. Once the shelf 64 is disconnected from the bracket 68, the bracket 66 carries the weight of the shelf 64 at the hinge 124. The clip 82 ensures that the joint 84 between the shelf 64 and the left bracket 66 does not unintentionally separate. Advantageously, this stabilizes the shelf 64 in the opened position such that a technician may maintain, install, and route of fibers in the rack mount assembly 52 without unintentional disconnection of the shelf 64 from the left bracket 66. Although not shown in Fig. 3 but described below and shown in Figs. 10 and 10A, the hinge 124 may alternatively be established proximate the right bracket 68 and the right frame member 62b. In that regard, and described with reference to Figs. 7-11 below, the hinge 124 may be selectively formed proximate the left frame member 62a or the right frame member 62b after installation of the rack mount assembly 52 in the rack 32.

Further with regard to assembly and installation, the rack mount assembly 52 shown in Fig. 4 may be preassembled at a factory with the clip 82 coupled to the left bracket 66 thereby forming the hinge 124 at the joint 84. The shelf 64 may be joined to the right bracket 68 at the right joint 86. The rack mount assembly 52 may be installed in the rack 32 by inserting it between the left and right vertical frame members 62a, 62b and attaching one or both brackets 66, 68 via mounting flanges 96, 106 to the respective frame members 62a, 62b. The rack mount assembly 52 is then pivotable about the hinge 124 from an installed, operating position, shown in Figs. 2 and 4, to an opened position, shown in Fig. 3. However, installation is not limited to this method.

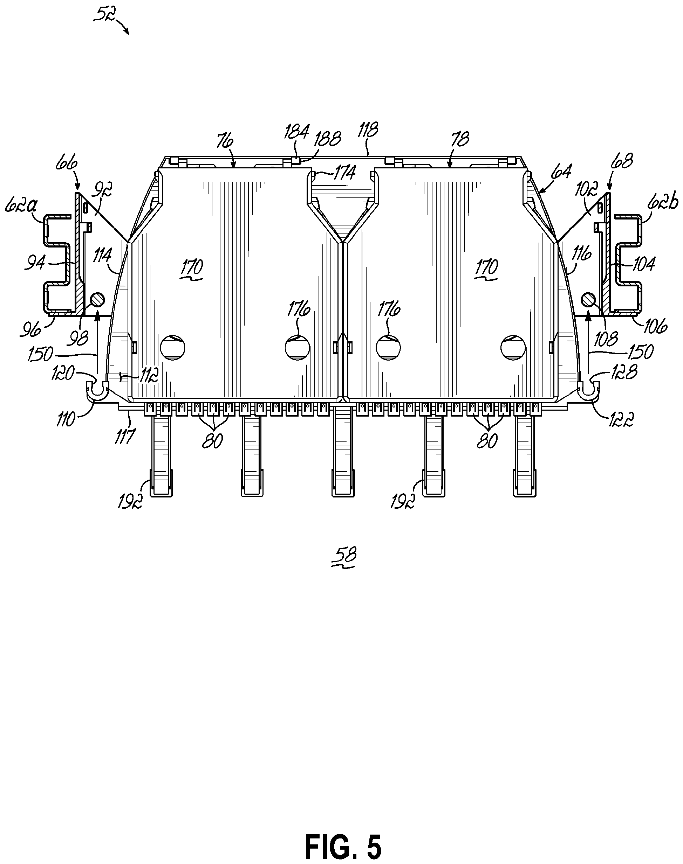

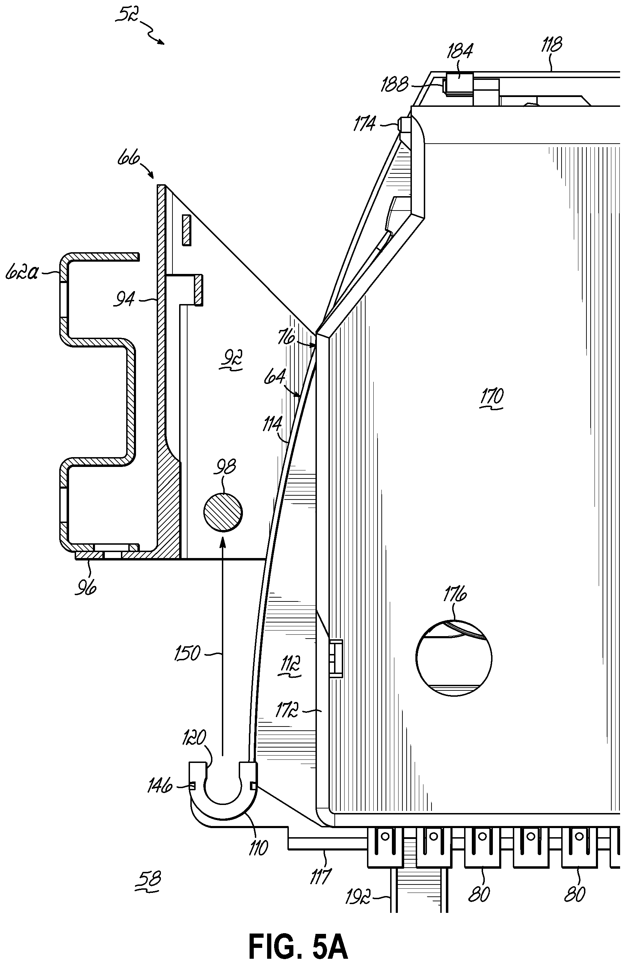

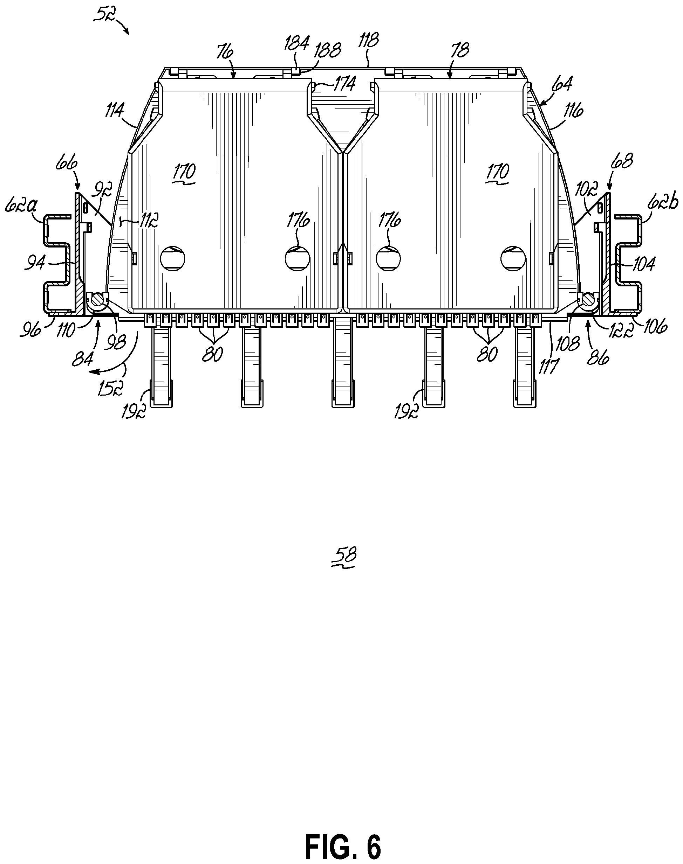

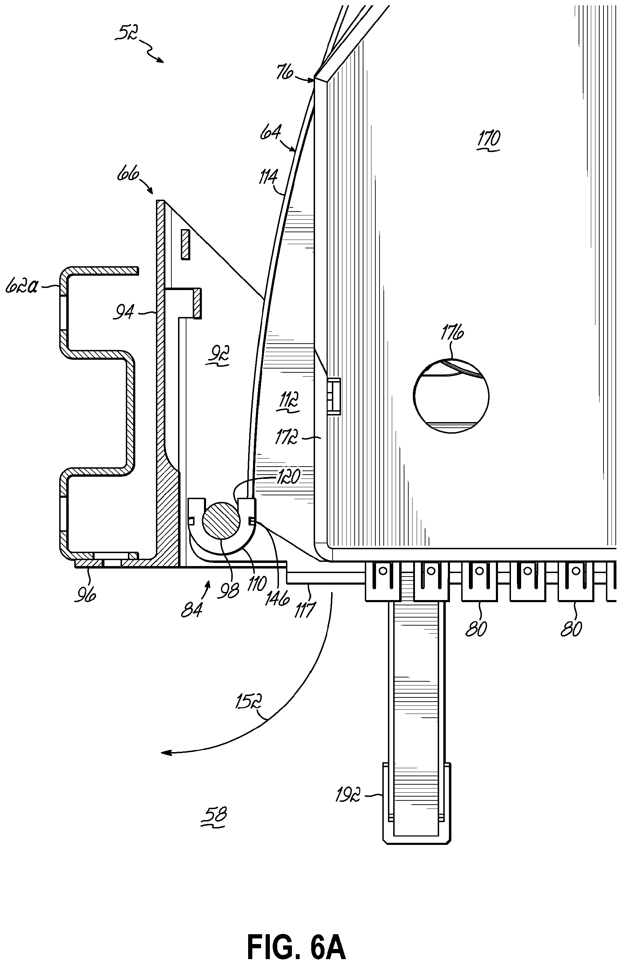

Other exemplary installation methods are described with reference to Figs. 5-11A. For example, and with reference Figs. 5, 5A, 6, 6A, 7, and 7A, in one embodiment, a method of installation of the rack mount assembly 52 includes attachment of one or both the left bracket 66 to the left vertical frame member 62a or the right bracket 68 to the right vertical frame member 62b separate from the shelf 64. That is, and referring to Figs. 5 and 5A, attachment the right bracket 68 or the left bracket 66 may be attached to the respective vertical frame member 62a or 62b and then the remaining bracket 68 or 66 may be attached to the other of the vertical frame member 62a or 62b. Once the brackets 66, 68 are attached to the rack 32, the shelf 64 is inserted in the direction of arrows 150 between the brackets 66 and 68. The sockets 110 and 122 engage respective posts 98 and 108. Application of a slight force may be required to push the sockets 110 and 122 onto the respective posts 98 and 108 therefore forming joints 84 and 86. This may occur with an audible or tactile response as the posts 98, 108 pass through the openings 120, 128, respectively, and the sockets 110, 122 snap onto the posts 98, 108. This initial installed position of the shelf 64 is shown in Figs. 6 and 6A. The clip 82 may then be assembled in position.

To that end, the technician may make an initial determination as to which of the joint 84 or joint 86 is to form the hinge 124. That decision may depend, for example, on the location of the feeder cable 44 relative to the shelf 64. For example, if the feeder cable 44 is routed near the left frame member 62a, the technician may determine that the hinge 124 should be on the left side 114 or near the feeder cable 44. To that end, and referring to Figs. 6 and 6A, the technician may pivot the shelf 64 about the joint 84 between the post 98 and the socket 110, which may form a temporary pivot axis about which the shelf 64 is pivoted, such as according to arrow 152. At the other side of the shelf 64, that is on the right side 116, the technician disengages the socket 122 from the post 108. Basically, the technician disassembles the joint 86. Similar to engagement, disengagement of the socket 122 from the post 108 may coincide with an audible snap or tactile response. The technician may then swing the shelf 64 according to arrow 152 and away from the right bracket 68.

Referring to Figs. 7 and 7A, the technician may swing the shelf 64 to an opened position shown in which the shelf 64 is rotated to near perpendicular to its initial installed position, shown in Fig. 6. For example, in the opened position, front side 117 may be reoriented by about 90° relative to the front side 117 in the closed position. As shown in Fig. 7, the modules 76 and 78 may each be positioned outwardly of the front side 60 of the rack 32. With reference to Figs. 7 and 7A, the technician may then secure the clip 82 on the joint 84. Securing the clip 82 may include pinching the legs 126, 130 together (see Fig. 4B) so that the distance between the ledges 134 is sufficient to receive the socket 110. Once the clip 82 is received on the socket 110, the technician releases the clip 82 with the ledges 134 entering recesses 146 to form the hinge 124. The clip 82 is therefore secured in position and prevents the joint 84 from being unintentionally disassembled. The shelf 64 is rotatable about the hinge 124 from the opened position to the closed position, for example, shown in Fig. 4.

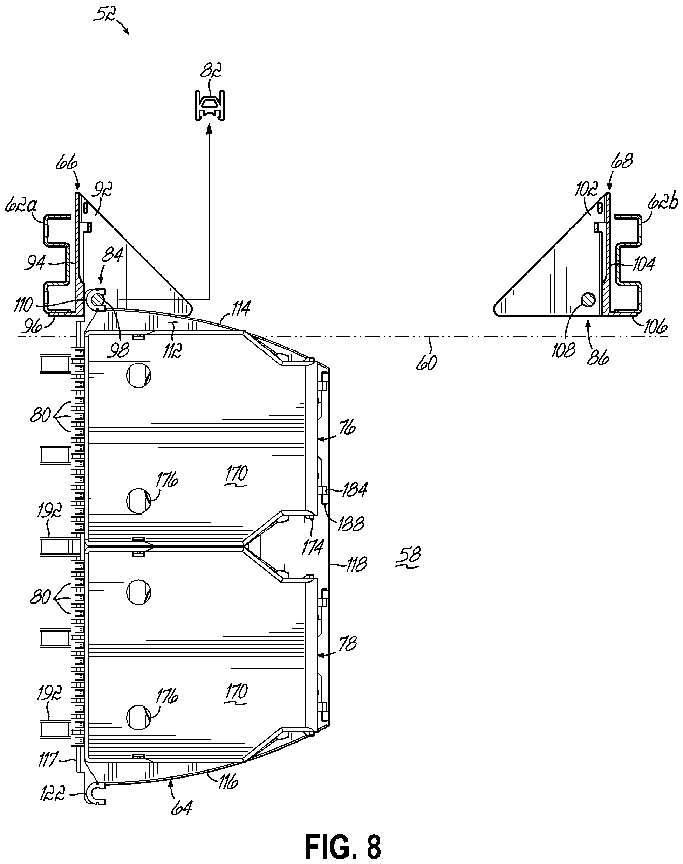

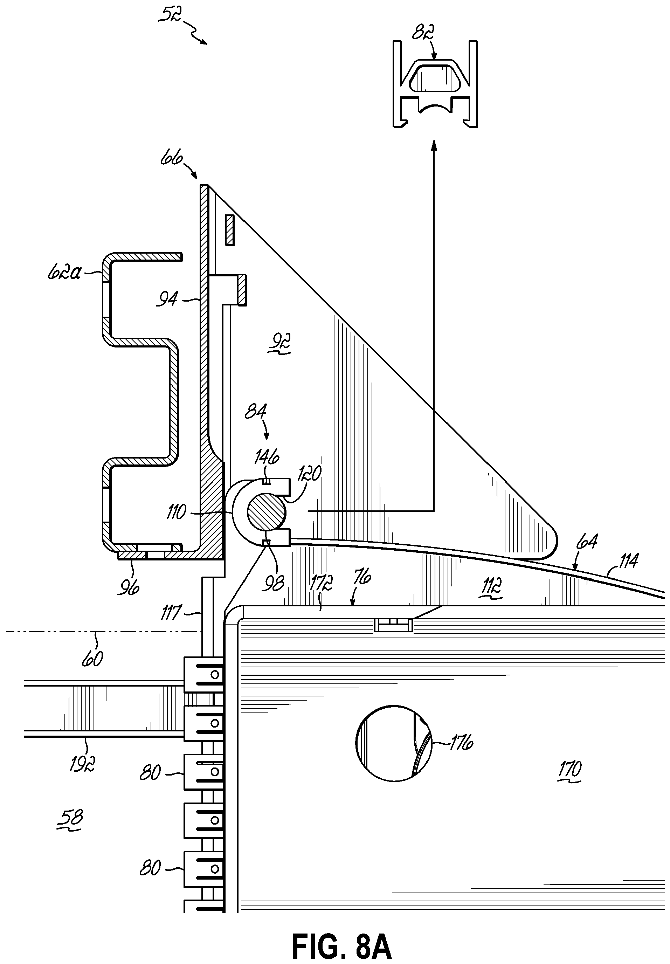

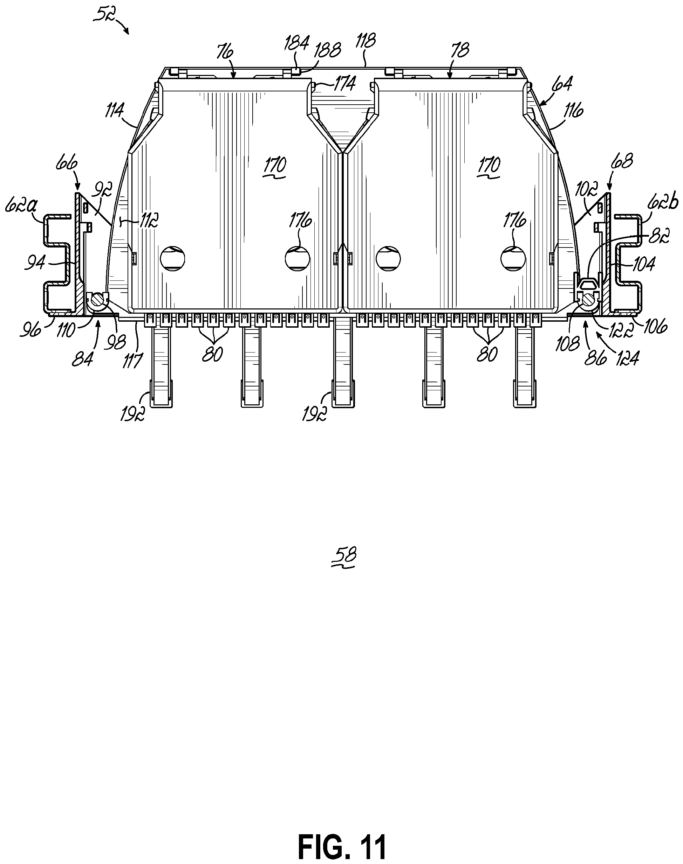

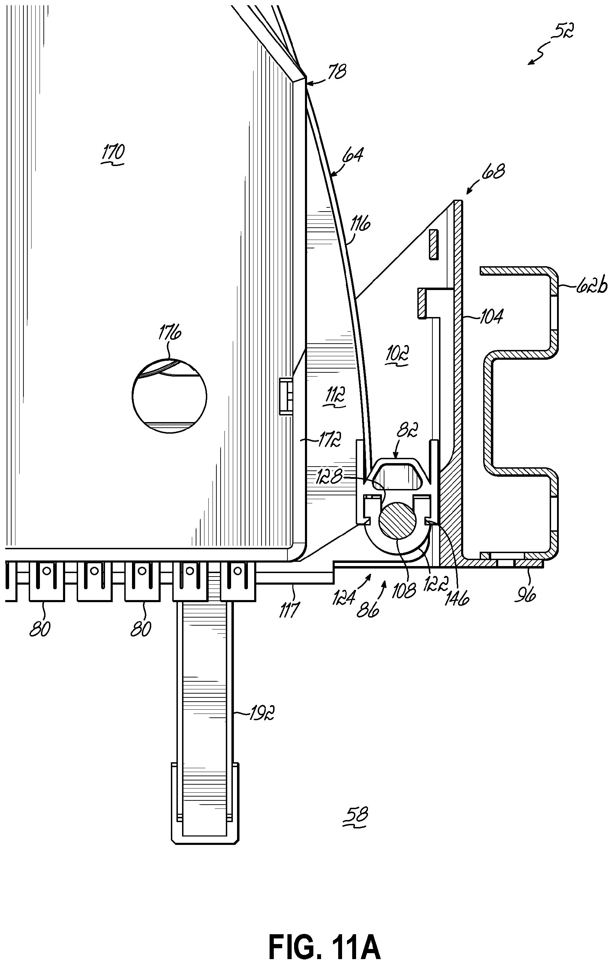

In one embodiment, and with reference to Figs. 8-11A, the clip 82 is moved from the joint 84 to the joint 86 thereby relocating the hinge 124 from the left side 114 of the shelf 64 to the right side 116 of the shelf 64. Specifically, the hinge 124 may be moved from the position shown in Figs. 4 and 4A to the position shown in Figs. 11 and 11A. Stated in another way, the location of the hinge 124 in the rack mount assembly 52 may be switched after the rack mount assembly 52 is installed in the rack 32. The location of the hinge 124 may be changed at any time and is reversible.

In one embodiment, a method of changing the location of the hinge 124 is shown in Figs. 8-10A. In that respect and with reference to Figs. 8 and 8A, a technician unlatches the joint 86 and rotates the shelf 64 to the opened position, as shown. The technician removes the clip 82. This may be achieved by pinching the legs 126,130 together and detaching the clip 82 from the joint 84. Even without the clip 82, the shelf 64 remains attached to the left bracket 66 at the joint 84. The rack 32 therefore supports the weight of the shelf 64 and the modules 76, 78.

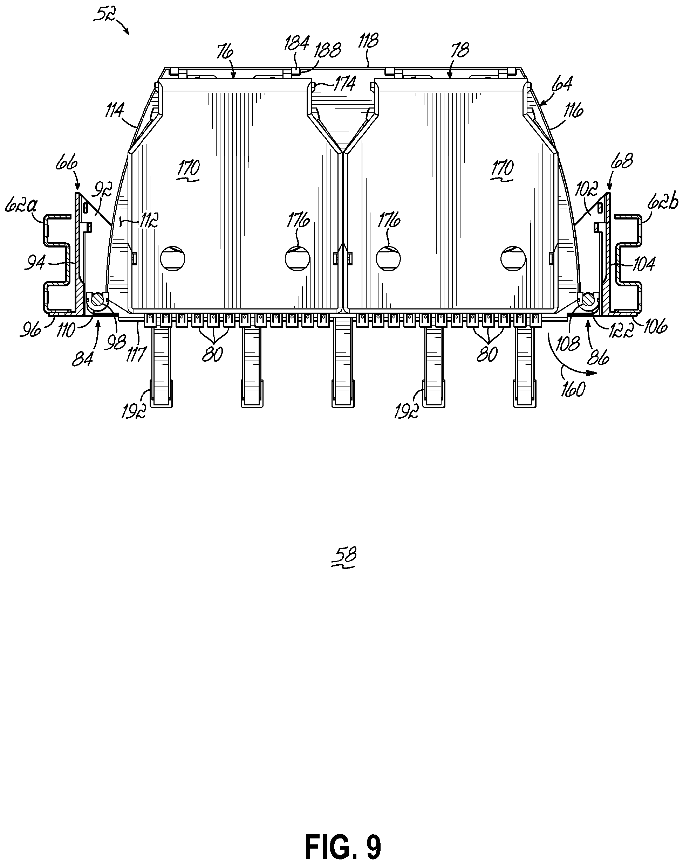

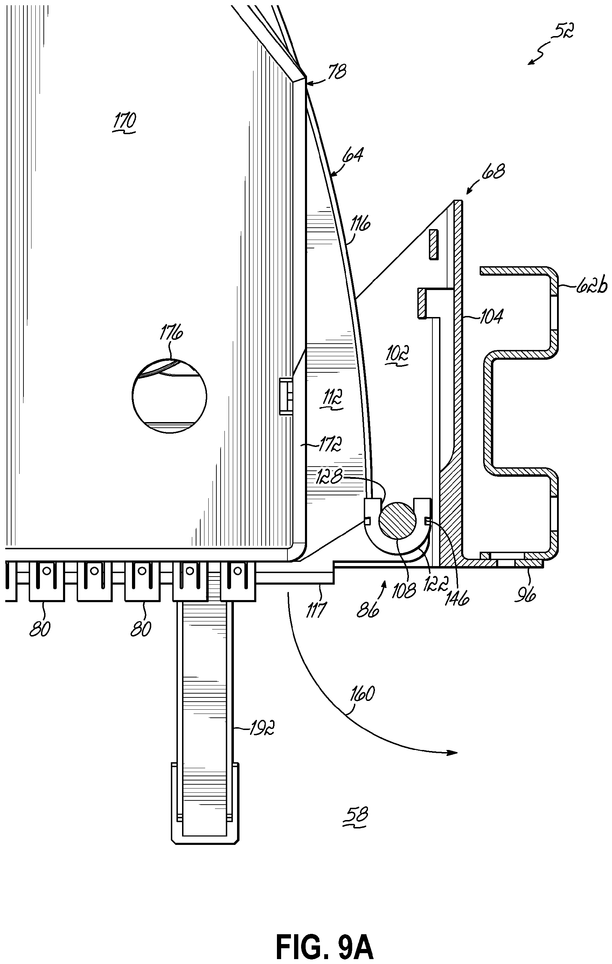

Once the clip 82 is detached, the technician rotates the shelf 64 about the joint 84 to the closed position in Fig. 9. With reference to Figs. 9 and 9A, to move the shelf 64 to the closed position, the technician may forcibly engage the post 108 and the socket 122 to form the joint 86. This may latch the shelf 64 in the closed position and secures the shelf 64 to the right bracket 68 and consequently to the right vertical frame member 62b.

With continued reference to Figs. 9 and 9A, the technician may then unlatch the shelf 64 from the left bracket 66 by disconnecting the post 98 from the socket 110. In this way, the joint 84 is disassembled. The technician is then able to rotate the shelf 64 outwardly and to the right and away from the left bracket 66. This is shown by way of arrow 160.

Referring now to Figs. 10 and 10A, the technician may rotate the shelf 64 to an opened position. This opened position of Fig. 8 may mirror the opened position of Fig. 10. Thus, the rack mount assembly 52 may have two opened positions, one relative to the left bracket 66 (Fig. 8) and one relative to the right bracket 68 (Fig. 10).

With continued reference to Figs. 10 and 10A, in the opened position shown, the technician may secure the clip 82 to the socket 122 to form the hinge 124 at the joint 86. This secures the joint 86 against unintentional disassembly during any maintenance that follows. The technician may rotate the shelf 64 to the closed position, which is shown in Figs. 11 and 11A. At the closed position, the shelf 64 is latched at the joint 84 with the hinge 124 at the joint 86.

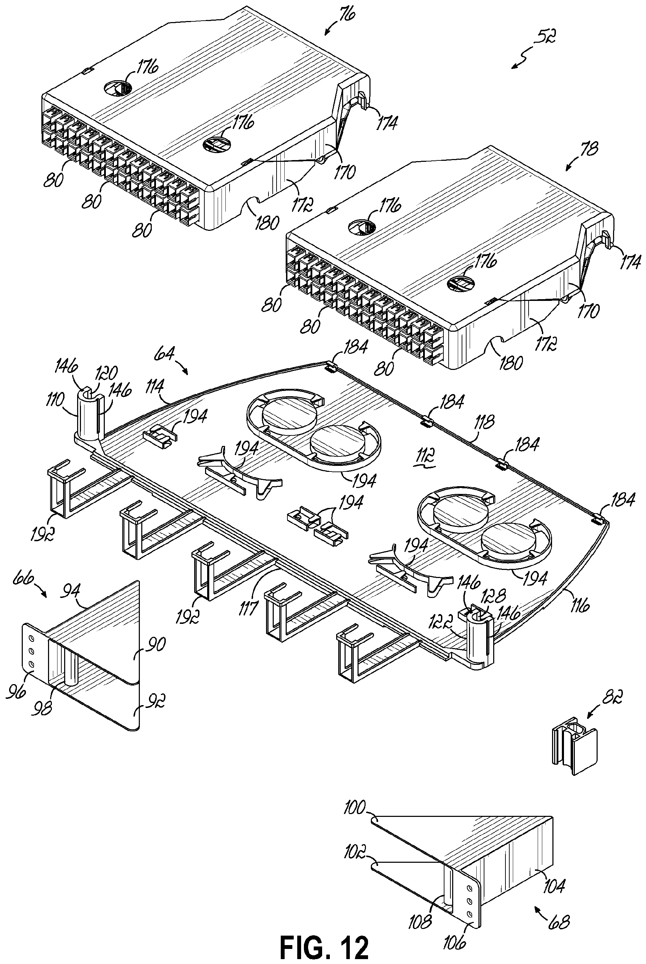

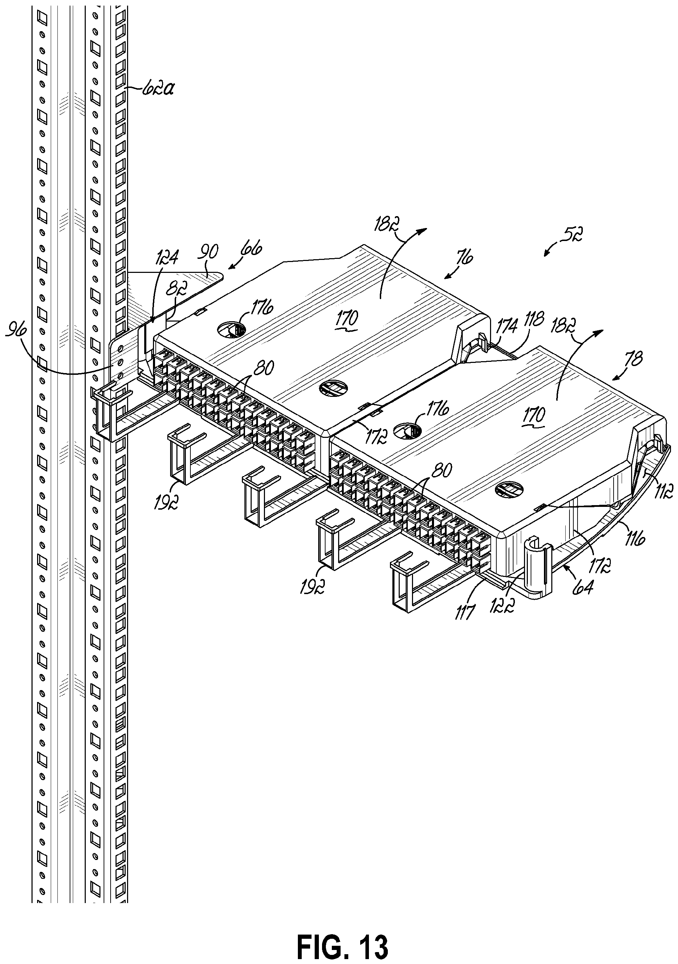

With reference now to Figs. 12-16, in one aspect of the disclosure, the rack mount assembly 52 includes one or more modules 76, 78 for storing and routing optical fibers to adapters and connectors 80. The shelf 64 supports the modules 76, 78 and so the modules 76, 78 are movable with the shelf 64 about the hinge 124, shown, for example, in Fig. 2 relative to Fig. 3. Specifically, the technician may move the shelf 64 outwardly to the opened position (Fig. 13) to gain access to the modules 76, 78.

In that regard and with reference to Figs. 12 and 13, each module 76, 78 includes a cover 170 coupled to a module base 172 at a hinge 174. The cover 170 is therefore movable relative to the respective module base 172 at the hinge 174 to expose the contents of the module 76, 78. This movement is shown schematically in Fig. 13 by arrows 182. In the exemplary embodiment, the cover 170 includes the adapters and connectors 80, which are accessible from the front side 60 of the rack 32 when the shelf 64 is in the closed position (e.g., Fig. 2). The cover 170 may include finger holes 176 by which the technician may lift and rotate the cover 170 to expose the contents of the module 76, 78. Similarly, the module base 172 may include a finger recess 180 by which the technician can lift the entire module 76, 78 in the same direction relative to the shelf 64.

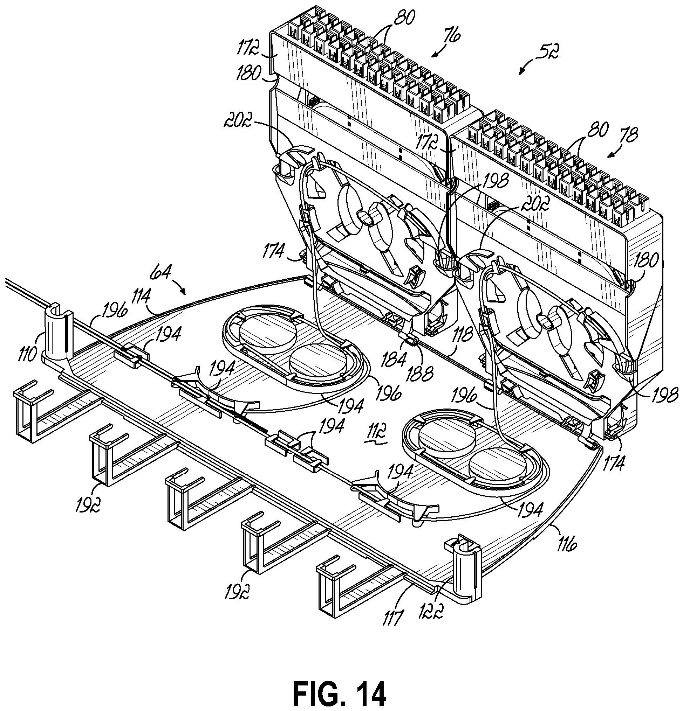

Referring to Figs. 12 and 14, the main support surface 112 of the shelf 64 is exposed by rotation of both modules 76, 78 upward relative to the shelf 64, such as by lifting at recesses 180. Thus, when the shelf 64 is in the opened position (e.g., Fig. 13) such that the modules 76, 78 clear the front side 60 of the rack 32, the cover 170 and/or the module 76, 78 is rotatable upward relative to the main support surface 112. In that regard, and by way of example, the main support surface 112 includes receptacles 184 at or proximate the rear side 118 of the shelf 64. The receptacles 184 receive a pair of L-shaped pins 188 extending from each module 76, 78. The receptacles 184 and pins 188 to form an axis of rotation for the module 76, 78 generally parallel with the rear side 118 of the main support surface 112. While the L-shaped pins 188 are shown extending from the module base 172 and receptacles 184 are in the shelf 64, these features may be reversed according to embodiments of the disclosure. In either arrangement, each module 76, 78 is independently rotatable about the axis relative to the shelf 64 so that the main support surface 112 is exposed, as is shown in Fig. 14 in which both modules 76, 78 are pivoted upward and away from the main support surface 112. Thus, in the exemplary embodiment, the cover 170 of each module 76, 78 is independently rotatable relative to the module base 172, and each module 76, 78 is also independently rotatable relative to the shelf 64 proximate the rear side 118 of the support surface 112.

Further, in the exemplary embodiment shown in Figs. 12 and 14, the main support surface 112 includes guides 194 for routing optical fibers 196 (Fig. 14), such as from the feeder cable 44 (e.g., Fig. 3), to one or both modules 76, 78. In Fig. 14, the fibers 196 are routed through the guides 194 to the shelf 64 from the left side 114. By way of example, the hinge 124 may be assembled at the left joint 84. This is shown in Fig. 13. That is, the hinge 124 and the direction from which the fibers 196 are routed may be the same. While not shown, as another example, the fibers 196 may be routed from the right side 116 with the hinge 124 assembled at the right joint 86. Embodiments of the disclosure are not limited to this relationship. Specifically, the optical fibers may be routed to the shelf 64 from the right side 116 or left side 114 with the hinge 124 at the left joint 84 or at the right joint 86, respectively.

In the exemplary embodiment, and with reference to Fig. 14, a technician may route one or more optical fibers 196 from the feeder cable 44 along the main support surface 112 to a location proximate each of the modules 76, 78, such as between the main support surface 112 and the module base 172. Also, in the exemplary embodiment shown, cable relief guides 192 extend outwardly from the front side 117 of the main support surface 112 to support cables (not shown) coupled to the adapters and connectors 80. Referring to Fig. 14, from the main support surface 112, one or more of the optical fibers 196 may be routed into each of the modules 76, 78 via openings 198 in the module base 172.

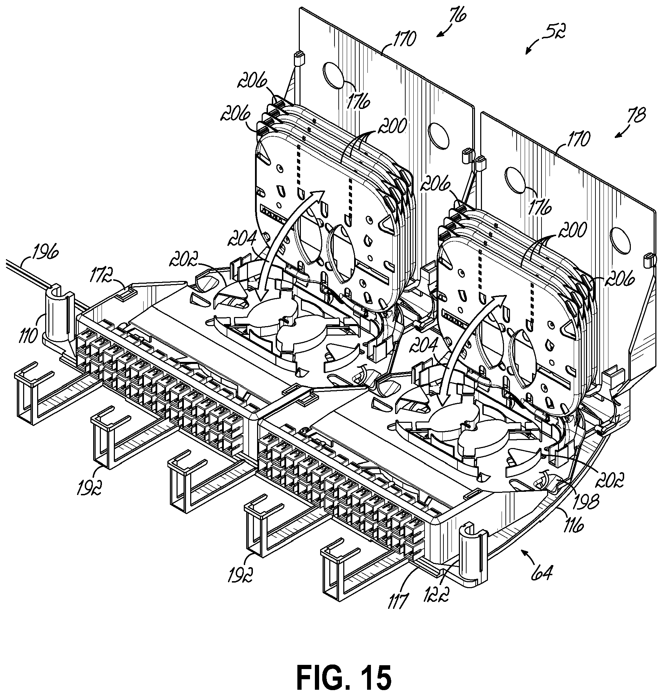

With continued reference to Fig. 14, the module base 172 of each module 76, 78 may include fiber routing guides 202. Some of the guides 202 may cooperate with selected ones of the guides 194 on the support surface 112. The routing guides 202 in the module base 172 receive the fiber 196 from the support surface 112 to support the fiber 196 for entry into the openings 198. The module base 172 may also provide a storage area within which additional length of fiber 196 may be stored. With reference to Fig. 15, the module base 172 may include additional or alternative guides 202 to route the fiber 196 within the module 76, 78 after the fiber 196 passes through opening 198.

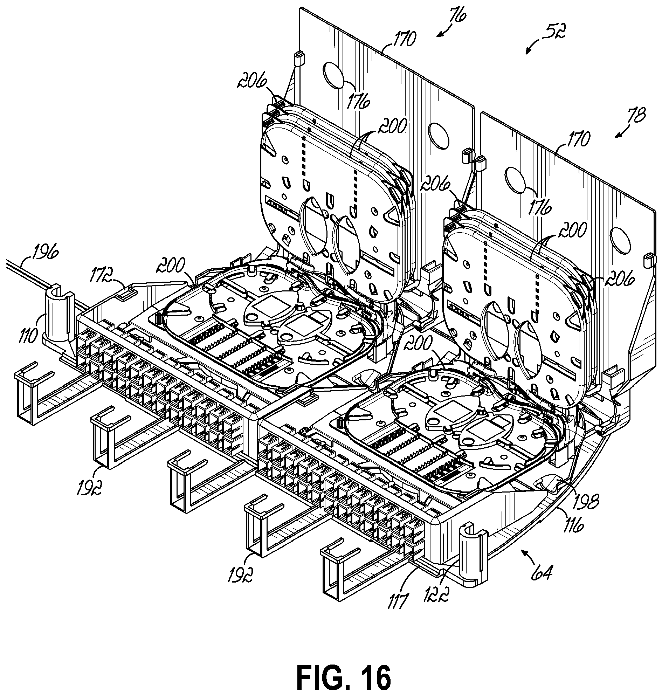

In the exemplary embodiment, and with reference to Figs. 15 and 16, each module 76, 78 includes one or more splice trays 200. The splice trays 200 are enclosed by the cover 170 and the module base 172 when the cover 170 is in a closed position, shown in Figs. 13 and 14. The modules 76, 78 are shown with the cover 170 in an opened position in Figs. 15 and 16. Each splice tray 200 may be hingedly coupled within each modules 76, 78 and are individually pivotal relative to the respective module base 172 and according to arrow 204. While four splice trays 200 are shown for each module 76, 78, embodiments of the disclosure are not limited to four. For example, each module 76, 78 may include a single splice tray 200 or more than four trays 200.

As shown, the splice trays 200 are stacked one upon another and receive one or more of the fibers 196 from the module base 172. The splice trays 200 may be offset slightly from one another when in an opened position shown in Figs. 15 and 16. This arrangement may appear as a stair-step like arrangement so that a tab 206 is more easily identified and selected for flipping the individual splice tray 200 up or down. Although not shown in Fig. 15, from each splice tray 200, one or more fibers 196 may be routed to and connected to the one of the adapters and connectors 80. In this way, the fibers 196 may be organized within the modules 76, 78, specifically within individual ones of the splice trays 200 and separated out to be coupled to one or more preselected adapters and connectors 80.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The disclosure in its broader aspects is therefore not limited to the specific details, representative apparatus and methods and illustrative examples shown and described. Accordingly, departures may be made from such details without departing from the scope of the disclosure.

## Claims

**1.** A rack mount assembly configured to be received in an equipment rack of a fiber optic network, the equipment rack having a front side and a back side with a first vertical frame member opposing a second vertical frame member between the front side and the back side, the rack mount assembly comprising:
a shelf having a main support surface;
a first bracket configured to be attached to the first vertical frame member, the first bracket being configured to form a first joint with the shelf; and
a second bracket configured to be attached to the second vertical frame, the second bracket being configured to form a second joint with the shelf,
wherein the shelf is pivotal at at least one of the first joint and the second joint such that when the rack mount assembly is secured in the equipment rack, the shelf is movable from a closed position to an opened position in which the shelf is configured to extend outwardly of the front side of the equipment rack.

**2.** The rack mount assembly of claim 1, further comprising:
a clip configured to be removably coupled to the first joint, and when coupled to the first joint, the clip forms a hinge at the first joint.

**3.** The rack mount assembly of claim 2, wherein the clip includes a web coupling a first leg to a second leg, each of the first leg and the second leg including a ledge, the first leg and second leg being movable relative to the web.

**5.** The rack mount assembly of any preceding claim, wherein in the opened position, a top, a bottom, and a rear side of the shelf are configured to be exposed and accessible relative to the equipment rack.

**6.** The rack mount assembly of any preceding claim, wherein in the closed position, the shelf is coupled to each of the first bracket and the second bracket at the first joint and the second joint, respectively.

**7.** The rack mount assembly of any preceding claim, wherein in the opened position, the shelf is coupled to the first bracket at the first joint and is disconnected from the second bracket.

**8.** The rack mount assembly of any preceding claim, wherein the second joint is configured to be selectively disassembled so that the shelf is pivotal toward the opened position.

**9.** The rack mount assembly of any preceding claim, wherein the first bracket includes one of a first post and a first socket and the shelf includes the other of the first post and the first socket, and
wherein the first socket is configured to receive the first post to form the first joint.

**10.** The rack mount assembly of claim 9, wherein the first socket has an opening that has a dimension less than an outside dimension of the first post.

**11.** The rack mount assembly of claim 9 or 10, wherein the first bracket includes:
(i) a base wall;
(ii) a pair of opposing flanges extending from the base wall, the first post extending between the pair of opposing flanges; and
(iii) a mounting flange extending from the base wall in an opposing direction from the pair of opposing flanges, wherein the mounting flange is configured to secure the first bracket to the first vertical frame member.

**12.** The rack mount assembly of any of claims 9-11, when dependent from claim 3, wherein the first bracket includes one of a first post and a first socket and the shelf includes the other of the first post and the first socket,
wherein the first socket is configured to receive the first post to form the first joint, and
wherein the first socket includes a pair of recesses, each recess of the pair of recesses receiving one of the ledges when the clip is coupled to the first joint.

**13.** The rack mount assembly of any preceding claim, further comprising:
at least one module supported on the main support surface, the at least one module being configured to receive at least one optical fiber.

**14.** The rack mount assembly of claim 13, wherein the at least one module includes a cover and a base, the cover being coupled to the base at a hinge.

**15.** The rack mount assembly of claim 13 or 14, wherein the at least one module encloses at least one splice tray for routing at least one optical fiber.

**16.** An equipment rack in a fiber optic network having one or more feeder cables containing one or more optical fibers, comprising:
one or more rack mount assemblies of any of claims 1-15 mounted in the equipment rack,
wherein the one or more optical fibers are routed to the one or more rack mount assemblies.
